# EUROPEAN PATENT APPLICATION

(11) **EP 1 950 432 A1**
(43) Date of publication of application: **30.07.2008**
(21) Application number: 06832650.3
(22) Date of filing: 15.11.2006
(51) Int. Cl.: F16B 19/08, F16J 15/06

(54) **RIVET**

(30) Priority: 17.11.2005 JP 2005332907
(71) Applicant: Fukui Byora Co., Ltd., Awara-city, Fukui 919-0807 (JP)
(72) Inventor: FUJII, Naoya, Awara-city, Fukui; 9190807 (JP); NAMBU, Takehiko, Awara-city, Fukui; 9190807 (JP); NOZAKI, Yukio, Awara-city, Fukui; 9190807 (JP)
(74) Representative: Becker, Eberhard
(86) International application number: PCT/JP2006/322719
(87) International publication number: WO 2007/058191

(57) **Abstract**

A generation of rust or electric corrosion between a rivet and a member is prevented by enhancing a degree of sealing between the rivet and the member.

A first enlarged-diameter portion 16 and a second enlarged-diameter portion 20 are provided between a head part 12 and a leg part 14 of a rivet 10. A space portion 32 is formed among an upper layer workpiece 24, the first enlarged-diameter portion 16 and the second enlarged-diameter portion 20 in a state where the rivet 10 is driven into the upper layer workpiece 24 and a lower layer workpiece 26. Because of the existence of the space portion 32, the contact between the upper layer workpiece 24 and the first enlarged-diameter portion 16, and between the upper layer workpiece 24 and the second enlarged-diameter portion 20 can be secured. Therefore, the degree of sealing between the rivet 10 and the upper layer workpiece 24 is improved.

## Description

### TECHNICAL FIELD

The present invention relates to a rivet which joins a plurality of members.

### BACKGROUND ART

As a method for joining a plurality of members, a joining method using a rivet is known. For this joining method using the rivet, although various methods are conceivable depending on a shape, material, and the like of the members to be joined, when joining relatively thin plate-shaped members, a joining method using a self piercing rivet is applied. An example of the joining method using the self-piercing rivet is disclosed in Patent Document described below.
[Patent Document 1]
Japanese Patent Application Publication No. JP-A-2001-304214

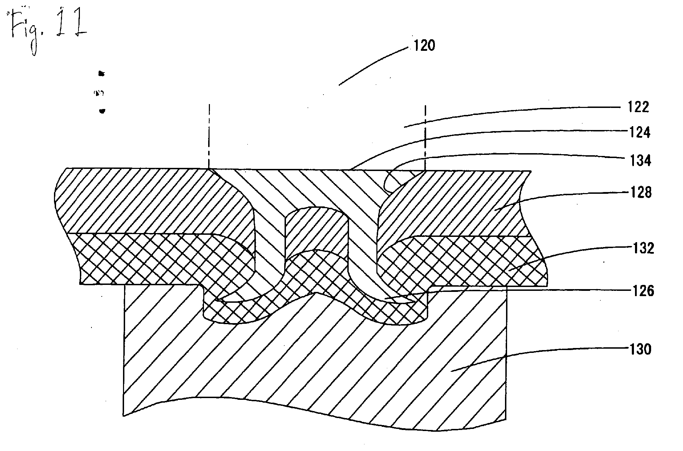

A sectional view of a structure of a related art self-piercing rivet is shown in Fig. 11. In a caulking process of a rivet 120 shown in Fig. 11, a head part 124 of the rivet 120 is pressed downward by a punch 122, and a leg part 126 penetrates an upper layer workpiece 128, whereby the leg part 126 enlarges a diameter of a lower layer workpiece 132 downward in an outer diameter direction along with a groove shape of a die 130. The leg part 126 fits into the lower layer workpiece 132 in this state, resulting in the upper layer workpiece 128 and the lower layer workpiece 132 being joined together.

### DISCLOSURE OF THE INVENTION

### Problems to be Solved by the Invention

However, the joining structure using the above-described conventional rivet 120 includes a problem that rust or electric corrosion is generated between the rivet 120 and the upper layer workpiece 128. An explanation regarding this will be given hereinafter. In the caulking process of the rivet, when driving the rivet 120 using the punch 122, the leg part 126 penetrates the upper layer workpiece 128. A contact surface of the upper layer workpiece 128 with a rivet enlarged-diameter portion 134 formed at this time normally has a shape in accordance with a shape of the rivet enlarged-diameter portion 134, and when the rivet enlarged-diameter portion 134 contacts with the contact surface of the upper layer workpiece 128, a sealing property between them is secured.

However, when a caulking force in the caulking process is insufficient, or when a vibration or a load is applied to the upper layer workpiece 128 or to the lower layer workpiece 132 from the outside after the rivet-joining is performed, the sealing property between the rivet enlarged-diameter portion 134 and the contact surface is lowered, which may cause a moisture to penetrate between the rivet enlarged-diameter portion 134 and the contact surface. This is likely to happen especially when a cross-sectional shape of the rivet enlarged-diameter portion 134 is a straight line or a curve. This is because if the cross-sectional shape is a straight line or a curve, a pressing force is inevitably lowered at every place when the load is applied to the workpiece, although the contact surface and the rivet enlarged-diameter portion 134 tend to contact with each other uniformly. When the moisture penetrates into a gap between the contact surface and the rivet enlarged-diameter portion 134 in this state, there arises a problem that the rust or the electric corrosion is generated between the rivet 120 and the upper layer workpiece 128.

This problem can be prevented to a certain degree by performing a rust prevention process on a surface of the upper layer workpiece 128. However, since the rivet 120 penetrates the upper layer workpiece 128 in the caulking process, there is a chance that the rust prevention on the surface of the upper layer workpiece 128 is peeled off, and the generation of rust between the upper layer workpiece 128 and the rivet 120 may not be prevented sufficiently.

Accordingly, the present invention has been made to solve the above-described problems, and an object thereof is to reduce a generation of rust or electric corrosion between a rivet and a workpiece, by enhancing a sealing property therebetween.

### Means for Solving the Problems

The present invention has been invented to achieve the above-described object, and an invention according to claim 1 is composed of a rivet for joining a plurality of members, which is characterized by including: a head part; a leg part whose inside diameter side is hollow; a first enlarged-diameter portion existing between the leg part and the head part, and whose outside diameter size is increased from the leg part toward the head part at a predetermined ratio; and a second enlarged-diameter portion extending from an end portion at the head side part of the first enlarged-diameter portion, and whose outside diameter size is increased from the leg part toward the head part at a ratio different from the predetermined ratio.
According to the above-described structure, when joining the members using the rivet, the leg part, the first enlarged-diameter portion and the second enlarged-diameter portion of the rivet deform the members. At this time, since the first enlarged-diameter portion and the second enlarged-diameter portion are structured to have mutually different increasing ratios of the outside diameters, a space is formed between a boundary region between the first enlarged-diameter portion and the second enlarged-diameter portion, and the member. This space improves degrees of sealing between the member and the first enlarged-diameter portion, and between the member and the second enlarged-diameter portion. Consequently, the generation of rust or electric corrosion between the rivet and the member can be suppressed. Further, since this space provides a so-called labyrinth effect, the sealing property between the rivet and the member is enhanced.
Further, since there exists two enlarged-diameter portions that differ in increasing ratios of outside diameters, even when, after joining the rivet to the member, a displacement in the joining therebetween is generated due to a load or a vibration applied to the member, a sufficient sealing strength between either of the enlarged-diameter portions and the member can be secured, regardless of the direction of the displacement.

Note that the description in which the outside diameter size of the first enlarged-diameter portion is increased at a predetermined ratio, can also indicate such cases in which the outside diameter of the portion is proportionally increased (increasing ratio is constant, cross-sectional shape is a straight line, in this case), the outside diameter of the portion is quadrically increased (cross-sectional shape is a curve, in this case), and the outside diameter of the portion is increased at a ratio determined beforehand (cross-sectional shape is an arc, for example). Further, the description in which the outside diameter size of the second enlarged-diameter portion is increased at a ratio different from that of the first enlarged-diameter portion, means that there is no continuity between the increasing ratio of the first enlarged-diameter portion and the increasing ratio of the second enlarged-diameter portion. Therefore, the outside diameter of the first enlarged-diameter portion and the outside diameter of the second enlarged-diameter portion should be neither curves having the same curvature, nor arcs having the same center, nor the same straight line.

Further, an invention according to claim 2 is composed of the rivet described in claim 1, which is characterized in that the first enlarged-diameter portion extends from an end portion at the head part side of the leg part. With this structure, since the first enlarged-diameter portion is structured to extend from the leg part, the first enlarged-diameter portion favorably contacts with the member.

Further, an invention according to claim 3 is composed of the rivet described in claim 1, which is characterized in that the first enlarged-diameter portion extends from the end portion at the head part side of the leg part via a curved-shaped portion. With this structure, the first enlarged-diameter portion can favorably contact with the member, and further, even if a stress is applied to the rivet when the leg part is deformed outward at the time of joining the members using the rivet, the stress can be alleviated by the curved-shaped portion. Therefore, a strength of the rivet with respect to the stress can be enhanced. Note that the curved shape means a shape in which no angle is formed by the intersection of straight lines, and for the curved shape, an arc shape (a part of a circle), and a part of an ellipse can be cited.

. Further, an invention according to claim 4 is composed of the rivet described in claim 3, which is characterized in that the second enlarged-diameter portion extends from the first enlarged-diameter portion via a second curved-shaped portion. With this structure, the second enlarged-diameter portion can favorably contact with the member, and further, even if a stress is applied to the rivet when the leg part is deformed outward at the time of joining the members using the rivet, the stress can be alleviated by the second curved-shaped portion. Therefore, a strength of the rivet with respect to the stress can be enhanced.

Further, an invention according to claim 5 is composed of the rivet described in any one of claims 1 to 4, which is characterized in that increasing ratios of the outside diameters of the first enlarged-diameter portion and the second enlarged-diameter portion are respectively constant. With this structure, each of the first enlarged-diameter portion and the second enlarged-diameter portion has a cross-sectional shape of a straight line, so that a contact state with the member can be favorably secured. Especially in a case of the invention according to claim 3, the rivet contacts with the member at, at least two points among the first enlarged-diameter portion, the second enlarged-diameter portion and the member. Therefore, the degree of sealing between the rivet and the member can be further securely improved.

Further, an invention according to claim 6 is composed of the rivet described in any one of claims 1 to 5, which is characterized in that the increasing ratio of the outside diameter of the second enlarged-diameter portion is larger than that of the first enlarged-diameter portion. With this structure, since the increasing ratio of the outside diameter of the second enlarged-diameter portion is larger than that of the first enlarged-diameter portion, an angle formed on the member side by the first enlarged-diameter portion and the second enlarged-diameter portion is an obtuse angle. Therefore, a space portion can be securely formed between the rivet and the member, and thus the degree of sealing between the rivet and the member can be improved.

Further, an invention according to claim 7 is composed of the rivet described in any one of claims 1 to 3, which is characterized in that a shape of the outside diameter of the first enlarged-diameter portion is a curved shape, and the increasing ratio of the outside diameter of the second enlarged-diameter portion is constant. With this structure, since the shape of the outside diameter of the first enlarged-diameter portion close to the leg part has a curved shape, even if a stress is applied to the rivet when the leg part is deformed, the stress can be alleviated by the curved shape of the first enlarged-diameter portion. Therefore, a strength of the rivet with respect to the stress can be enhanced.

Further, an invention according to claim 8 is composed of the rivet described in any one of claims 1 to 7, which is characterized in that a sealing member is disposed at a region at which the second enlarged-diameter portion starts to extend from the first enlarged-diameter portion. With this structure, since the sealing member is disposed at the space portion formed between the rivet and the member, the degree of sealing between the rivet and the member can be enhanced.

Further, an invention according to claim 9 is composed of the rivet described in any one of claims 1 to 8, which is characterized in that a ratio of a length of center axis of the first enlarged-diameter portion to a length of center axis from the end portion at the head part side of the leg part to an end portion at the leg part side of the head part is not less than one-half nor more than two-thirds. With this structure, since the length of center axis of the first enlarged-diameter portion is longer than that of the second enlarged-diameter portion, the degree of sealing between the first enlarged-diameter portion and the member can be improved. Consequently, the degree of sealing between the rivet and the member can be enhanced as a whole. Especially, since the first enlarged-diameter portion has the inside diameter side being a hollow portion, the leg part is deformed in the outside diameter side, and thus the first enlarged-diameter portion and the member contact with each other in the direction of outside diameter side. Since a joining structure of the rivet utilizes the pressing force toward the outside diameter side, it is possible to improve the degree of sealing between the rivet and the member by providing a large area of the first enlarged-diameter portion.
By making the length of center axis of the first enlarged-diameter portion longer than that of the second enlarged-diameter portion, an insertion resistance of the rivet into the member becomes small. This is because the first enlarged-diameter portion has a smaller outside diameter than the second enlarged-diameter portion. Accordingly, a workability for driving the rivet is improved.

Further, an invention according to claim 10 is composed of the rivet described in any one of claims 1 to 9, which is characterized in that an end portion at the head part side of the hollow portion inside diameter side of the leg part is positioned further at the head part side than the region at which the second enlarged-diameter portion starts to extend from the first enlarged-diameter portion. With this structure, the material of the member can escape not only to the outside of the rivet but also into the inside (in the hollow portion) of the rivet when the rivet is driven. As a result, the workability for driving the rivet is improved.
Further, by adopting the above-described structure, the first enlarged-diameter portion can be deformed in the direction of outside diameter, which allows to enhance the sealing property between the member and the first enlarged-diameter portion, and further, it becomes possible to improve the degree of sealing between the rivet and the member. Note that the end portion at the head part side of the hollow portion being inside diameter side of the leg part means a bottom portion at the head part side of the hollow portion being inside diameter side of the leg part, and what is meant in claim 10 is that the bottom portion is positioned further at the head part side than the first enlarged-diameter portion. Therefore, the first enlarged-diameter portion in claim 7 becomes relatively easy to be displaced in the outside diameter side since it has a conical-cylindrical shape having a hollow portion inside thereof.

Further, an invention according to claim 11 is composed of the rivet described in any one of claims 1 to 10, in which the first enlarged-diameter portion extends from the leg part and the second enlarged-diameter portion extends from the first enlarged-diameter portion, which is characterized in that it further includes a third enlarged-diameter portion extending from the second enlarged-diameter portion. With this structure, since each of the first enlarged-diameter portion, the second enlarged-diameter portion and the third enlarged-diameter potion contacts with the member, the rivet and the member come in contact at, at least three points. Therefore, the degree of sealing between the rivet and the member can be securely enhanced.

### Effects of the Invention

According to the present invention, since a rivet and a member come in contact at a first enlarged-diameter portion and a second enlarged-diameter portion, it is possible to improve a degree of sealing between the rivet and the member. Therefore, a generation of rust or electric corrosion between the rivet and the member can be prevented.

### BRIEF DESCRIPTION OF THE DRAWINGS

Fig. 1(a) and Fig. 1(b) are a sectional view and a bottom view showing shapes of a rivet of a first embodiment according to the present invention;
Fig. 2 is a sectional view showing a state where the rivet of the first embodiment according to the present invention is driven into a workpiece;
Fig. 3(a) and Fig. 3(b) are a sectional view and a bottom view showing shapes of a rivet of a second embodiment according to the present invention;
Fig. 4(a) and Fig. 4(b) are a sectional view and a bottom view showing shapes of a rivet of a third embodiment according to the present invention;
Fig. 5(a), Fig. 5(b), and Fig. 5(c) are a sectional view, a bottom view and an enlarged view of a substantial part showing shapes of a rivet of a fourth embodiment according to the present invention;
Fig. 6(a) and Fig. 6(b) are a sectional view and a bottom view showing shapes of the rivet of the fourth embodiment according to the present invention;
Fig. 7(a), Fig. 7(b), and Fig. 7(c) are a sectional view, a bottom view and an enlarged view of a substantial part showing shapes of a rivet of a modified example of the fourth embodiment according to the present invention;
Fig. 8(a) and Fig. 8(b) are a sectional view and a bottom view showing shapes of a rivet of a modified example of the fourth embodiment according to the present invention;
Fig. 9(a) and Fig. 9(b) are a sectional view and a bottom view showing shapes of a rivet of a fifth embodiment according to the present invention;
Fig. 10(a) and Fig. 10(b) are a sectional view and a bottom view showing an application example of an embodiment according to the present invention; and
Fig. 11 is a sectional view for explaining a related art rivet.

### EXPLANATION OF NUMERALS AND SYMBOLS

- 10: rivet
- 12: head part
- 14: leg part
- 16: first enlarged-diameter portion
- 18: end portion at head part side of hollow portion
- 20: second enlarged-diameter portion
- 21: corner portion
- 24: upper layer workpiece
- 26: lower layer workpiece
- 32: space portion
- 90: first curved portion
- 92: second curved portion

### BEST MODES FOR CARRYING OUT THE INVENTION

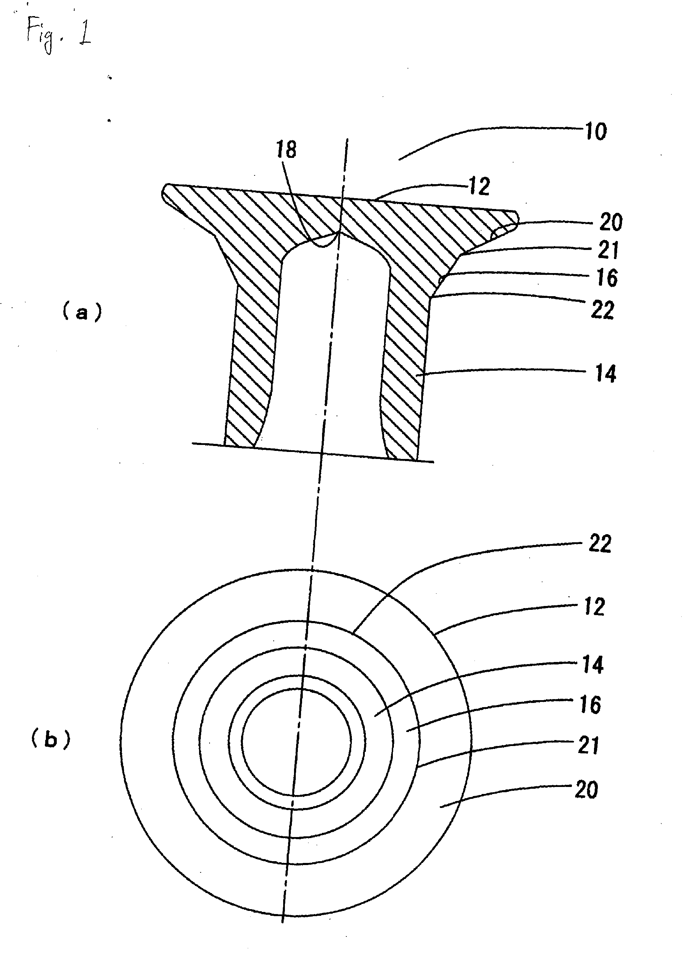

Hereinafter, embodiments for conducting the present invention will be explained in detail. Fig. 1 (a) shows a sectional view of a rivet of a first embodiment applying the present invention, and Fig. 1(b) is a view showing a state where the rivet of Fig. 1(a) is viewed from the bottom.

A rivet 10 in Fig. 1(a) is used for joining a plurality of members, and Fig. 1(a) shows a state before the rivet 10 is driven into the member. A head part 12 is provided at an upper end side of the rivet 10, and a leg part 14 to be driven into the member is provided at a lower end side of the rivet 10. As shown in Fig. 1(b), the head part 12 has a substantially circular external shape, and an upper end side thereof is a flat surface. The flat surface being an upper surface of the head part 12 is a surface to be pressed by a punch 22, which will be described later. Further, as shown in Fig. 1(a), an external shape of a cross section of the head part 12 is an arc shape projecting outward.

The leg part 14 has a cylindrical shape with a hollow portion inside thereof, and has an outside diameter being substantially constant. An inside diameter of the leg part 14 is also substantially constant, but, it is made to be larger than the other portions in the vicinity of the lower end portion of the leg part 14. This is because the thickness of the lower end portion of the leg part 14 is made to be thin by considering the ease of drive into the member.

A first enlarged-diameter portion 16 is provided at the head part 12 side of the leg part 14. As seen from Fig. 1 (b), the first enlarged-diameter portion 16 has a circular external shape, and is a conical-cylindrical member having a hollow portion inside thereof. The first enlarged-diameter portion 16 has the external shape in which a diameter thereof gradually increases from the leg part 14 side toward the head part 12 side, and in this sense, the portion is called as the first enlarged-diameter portion 16. In the rivet 10, the leg part 14 and the first enlarged-diameter portion 16 are in common in including the hollow portions insides thereof, but, it is described by distinguishing between the leg part 14 whose outside diameter is substantially constant and the first enlarged-diameter portion 16 whose outside diameter gradually increases. As shown in Fig. 1(a), a cross-sectional shape of the external shape of the first enlarged-diameter portion 16 is a straight line, which means that the outside diameter of the first enlarged-diameter portion 16 is increased at a certain constant ratio (proportionally increased).

Further, from a portion with a constant value of the inside diameter toward the head part 12 side, there is a portion having a smaller inside diameter, in the inside-diameter side of the first enlarged-diameter portion 16. In Fig. 1(a), the first enlarged-diameter portion 16 has an inside diameter of a certain predetermined value, and a point where the inside diameter becomes zero, namely, an end portion 18 at the head part side of the hollow portion is positioned further at the head part 12 side than the position where the first enlarged-diameter portion 16 exists.

Further, a second enlarged-diameter portion 20 is provided at the head part 12 side of the first enlarged-diameter portion 16. Similar to the first enlarged-diameter portion 16, the second enlarged-diameter portion 20 also has a circular external shape, in which a portion having a hollow portion in a part of the inside diameter side is a conical-cylindrical member, and a portion having no hollow portion inside thereof is a cylindrical member. The second enlarged-diameter portion 20 has the external shape in which a diameter thereof gradually increases from the leg part 14 side toward the head part 12 side, and in this sense, the portion is called as the second enlarged-diameter portion 20.

A cross-sectional shape of the external shape of the second enlarged-diameter portion 20 is a straight line, as seen from Fig. 1(a), and the outside diameter of the second enlarged-diameter portion 20 increases at a certain constant ratio, similar to the first enlarged-diameter portion 16. Further, a line showing the external shape of the second enlarged-diameter portion 20 and a line showing the external shape of the first enlarged-diameter portion 16 are not connected in a straight line, but connected in a state of broken lines, as seen from Fig. 1 (a). This is due to a sudden change of the increasing ratios of the outside diameters, which is caused because the increasing ratio of the outside diameter of the second enlarged-diameter portion 20 is larger than that of the first enlarged-diameter portion 16. Therefore, at a connecting position between the first enlarged-diameter portion 16 and the second enlarged-diameter portion 20, a corner portion 21 is formed. The corner portion 21 is an obtuse angle, as seen from Fig. 1(a). Further, at a connecting position between the leg part 14 and the first enlarged-diameter portion 16, a corner portion 22 is formed. Note that in the present embodiment, a ratio of a length of center axis of the first enlarged-diameter portion 16 (length of center axis from the corner portion 22 to the corner portion 21) to a length of center axis from the end portion at the head part side of the leg part 14 (corner portion 22) to an end portion at the leg part side of the head part (intersecting point between the second enlarged-diameter portion 20 and the head part 12) is not less than one-half nor more than two-thirds.

An upper side of the second enlarged-diameter portion 20 is the head part 12, and an outside diameter of the head part 12 is an arc shape projecting outward as seen from Fig. 1(a). However, the head part 12 may have an outside diameter which is substantially constant, enlarged, or contracted. Further, the thickness of the head part 12 in the center axis direction of the rivet may exist to some degree as shown in Fig. 1 (a), or may be zero.

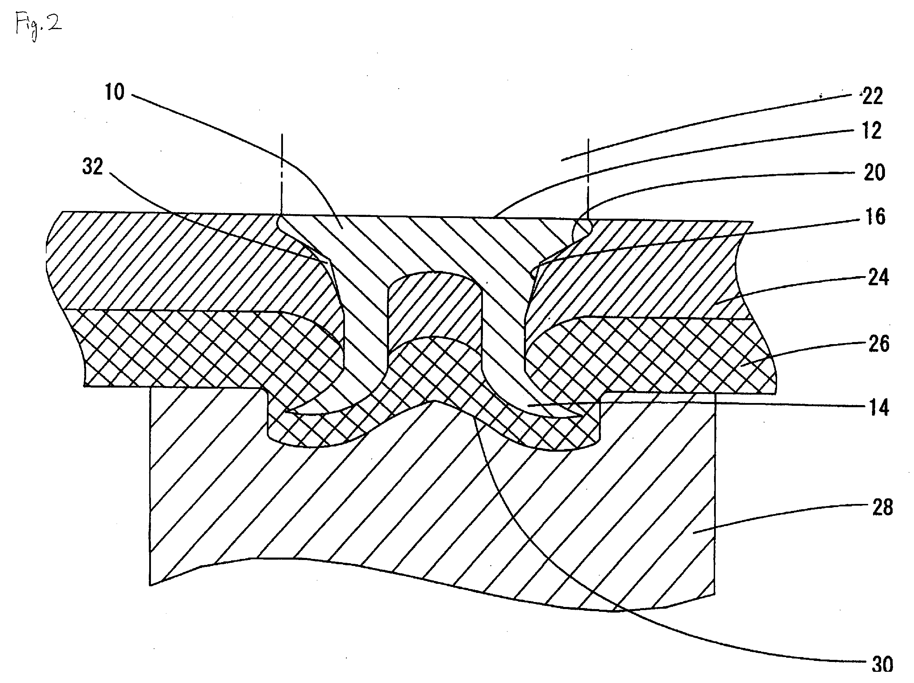

Next, a state where the rivet 10 of the first embodiment is driven into a workpiece will be explained using Fig. 2. Fig. 2 is a sectional view for explaining the state where the rivet 10 is driven into the workpiece.

The rivet 10 penetrates the upper layer workpiece 24 and the lower layer workpiece 26 when receiving a pressing force from an upper surface thereof from the punch 22. By the pressing force from the punch 22, the leg part 14 of the rivet 10 pierces the upper layer workpiece 24, and fits into the lower layer workpiece 26 while deforming the lower layer workpiece 26 downward. At this time, a die 28 functions as a receiving member of the leg part 14 and the lower layer workpiece 26, at a lower part of the lower layer workpiece 26. The die 28 is previously provided with a groove portion 30 having a shape with which the leg part 14 sufficiently fits into the lower layer workpiece 26. In the sectional view in Fig. 2, the groove portion 30 has a shape in which a center portion thereof bulges to the head part 12 side of the rivet 10, and this center portion of the groove portion 30 enables the leg part 14 of the rivet 10 to be bent in the right and left directions in Fig. 2. Therefore, the leg part 14 and the lower layer workpiece 26 are joined together firmly. The head part 12 of the rivet 10 fixes an upper end of the upper layer workpiece 24, and according to this operation, the upper layer workpiece 24 and the lower layer workpiece 26 are joined together by the rivet 10.

In a state where the upper layer workpiece 24 and the lower layer workpiece 26 are joined together by the rivet 10, a space portion 32 is formed among the upper layer workpiece 24, the first enlarged-diameter portion 16 and the second enlarged-diameter portion 20. As explained using Fig. 1(a) and Fig. 1(b), the corner portion 21 is formed at the connecting region between the first enlarged-diameter portion 16 and the second enlarged-diameter portion 20 due to the different increasing ratios of the outside diameters between the first enlarged-diameter portion 16 and the second enlarged-diameter portion 20, and the space portion 32 is considered to be formed by the existence of the corner portion 21. Although the leg part 14 of the rivet 10 pierces and penetrates the upper layer workpiece 24 when being pressed by the punch 22, since the upper layer workpiece 24 is a relatively hard material such as aluminum, iron, and the like, it contacts with the first enlarged-diameter portion 16 and the second enlarged-diameter portion 20 without abutting the corner portion 21. A contact portion between the upper layer workpiece 24 and the first enlarged-diameter portion 16 is formed mainly by receiving the pressing force in the right and left directions generated when the leg part 14 is deformed outward. The second enlarged-diameter portion 20 and the upper layer workpiece 24 come in contact mainly by receiving the pressing force in the vertical direction from the head part 12. In this case, since the space portion 32 is formed, a pressure at the contact portion between the rivet 10 and the upper layer workpiece 24 becomes high, and therefore the degree of sealing therebetween can be improved. This is because a contact area between the rivet 10 and the upper layer workpiece 24 decreases because of the existence of the space portion 32, and when the same amount of pressing force is applied, the pressure at the contact portion therebetween increases.
Further, since the space portion 32 exists, a so-called labyrinth effect is generated, and the sealing property is improved. Specifically, when water and the like penetrate from the outside, they are trapped in the space portion 32, and serve as a sealing member.
Depending on the shape of the rivet and the material of the workpiece, the space portion may not be formed, and the material of the workpiece may enter a portion corresponding to the space portion.

Therefore, the sealing property between the rivet 10 and the upper layer workpiece 24 can be enhanced. Accordingly, the water (water vapor) penetrating from a gap between the rivet 10 and the upper layer workpiece 24 can be reduced, and the generation of rust or electric corrosion between the rivet 10 and the upper layer workpiece 24 can be prevented. Further, by preventing the water from penetrating from the gap between the rivet 10 and the upper layer workpiece 24, it is also possible to prevent the generation of rust or electric corrosion between the rivet 10 and the lower layer workpiece 26.

Further, since the rivet 10 and the upper layer workpiece 24 come in contact at, at least two portions of the first enlarged-diameter portion 16 and the second enlarged-diameter portion 20, the sealing property between the rivet 10 and the upper layer workpiece 24 can be enhanced. This can be explained as follows. When a force to separate the upper layer workpiece 24 from the lower layer workpiece 26 in a vertical direction in Fig. 2 is applied from the outside, in a state where the rivet 10 is applied to the upper layer workpiece 24 and the lower layer workpiece 26, the pressure at the contact portion between the second enlarged-diameter portion 20 and the upper layer workpiece 24 is lowered, but, the pressure at the contact portion between the first enlarged-diameter portion 16 and the upper layer workpiece 24 is not relatively lowered because of a springback of the entire workpiece. This is because the first enlarged-diameter portion 16 and the upper layer workpiece 24 come in contact mainly by the force in the right and left directions in Fig. 2, as described above. Similarly, even when a force to separate the upper layer workpiece 24 from the lower layer workpiece 26 in the right and left directions is applied from the outside, it is possible to secure the degree of sealing of the contact portion between the second enlarged-diameter portion 20 and the upper layer workpiece 24 because of a springback of the entire member. Therefore, compared to a conventional rivet, the rivet 10 of the present embodiment can suppress the decrease in sealing property caused by the external force, and further, it can reduce the generation of rust or electric corrosion between the rivet 10 and the upper layer workpiece 24.

Further, since the space portion 32 is formed between the rivet 10 of the first embodiment and the upper layer workpiece 24, when water penetrates into the space portion 32, a waterdrop is generated in the space portion 32, which can prevent the water from penetrating between the rivet 10 and the upper layer workpiece 24, and between the rivet 10 and the lower layer workpiece 26. When the waterdrop is generated in the space portion 32, it serves as a sealing member, and can prevent water vapor from penetrating into a space behind the waterdrop. Normally, the waterdrop is not generated without a certain amount of space. Therefore, by intentionally providing a space as in the present embodiment, the state capable of generating the waterdrop can be realized.

Further, as described above, since the sealing property between the rivet 10 of the first embodiment and the upper layer workpiece 24 can be secured, a cost for performing the rust prevention process to the upper layer workpiece 24 can also be reduced. Normally, the rust prevention process to the upper layer workpiece 24 is performed basically on the contact portion with the rivet 10 where the rust is most likely to be generated. However, when the rust can be prevented from generating as in the present embodiment, it is possible to make the rust prevention process conducted to the entire upper layer workpiece 24 to be more inexpensive one.

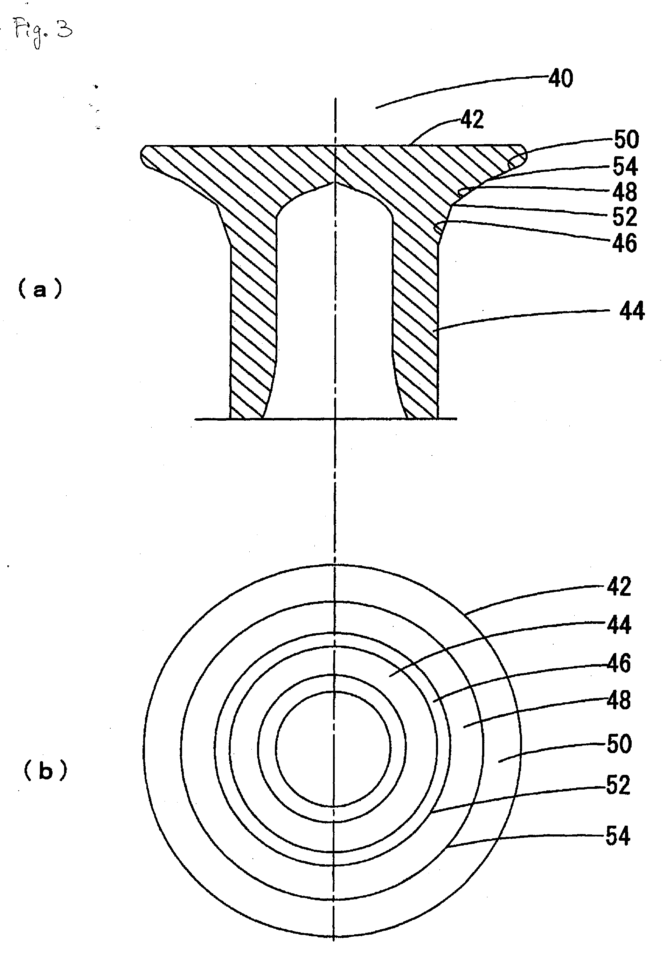

Next, a rivet 40 of a second embodiment of the present invention will be explained using Fig. 3(a) and Fig. 3(b). Regarding the rivet 40 of the second embodiment, the detailed description of a part having the same structure as the rivet 10 of the first embodiment will be omitted, and a part having a different structure will be specifically described. Fig. 3(a) is a sectional view for explaining the rivet 40 of the second embodiment, and Fig. 3(b) is a bottom view of the rivet 40.

The rivet 40 of the second embodiment has a first enlarged-diameter portion 46, a second enlarged-diameter portion 48 and a third enlarged-diameter portion 50 between a head part 42 and a leg part 44. The first enlarged-diameter portion 46 extends from the leg part 44, and has an external shape in which an outside diameter is gradually increased by a certain amount. The second enlarged-diameter portion 48 extends from an end portion at the head part 42 side of the first enlarged-diameter portion 46, and an outside diameter of the second enlarged-diameter portion 48 is also gradually increased by a certain amount. An increasing ratio of the outside diameter of the second enlarged-diameter portion 48 is larger than that of the first enlarged-diameter portion 46. Further, the third enlarged-diameter portion 50 extends from an end portion at the head part 42 side of the second enlarged-diameter portion 48, and an outside diameter of the third enlarged-diameter portion 50 is also gradually increased by a certain amount. An increasing ratio of the outside diameter of the third enlarged-diameter portion 50 is larger than that of the second enlarged-diameter portion 48. Further, as seen from Fig. 3(a), each of cross-sectional shapes of the external shapes of the first enlarged-diameter portion 46, the second enlarged-diameter portion 48 and the third enlarged-diameter portion 50 is a straight line.

As described above, the relation among the respective increasing ratios of the outside diameters of the first enlarged-diameter portion 46, the second enlarged-diameter portion 48 and the third enlarged-diameter portion 50 is as described above, and the increasing ratios of the outside diameters are suddenly changed at the connecting points of the respective enlarged-diameter portions. Accordingly, a first corner portion 52 and a second corner portion 54 are formed on the rivet 40, as shown in Fig. 3 (a) and Fig. 3(b). Therefore, in the present embodiment, although a view corresponding to Fig. 2 of the first embodiment is omitted, two space portions are formed between an upper layer workpiece and the rivet 40 in a state where the rivet 40 is driven into the workpiece. Specifically, since the workpiece and the rivet 40 come in contact at the first enlarged-diameter portion 46, the second enlarged-diameter portion 48 and the third enlarged-diameter portion 50, respectively, the sealing property between the rivet 40 and the workpiece is improved. Consequently the generation of rust or electric corrosion between the rivet 40 and the workpiece can be prevented.

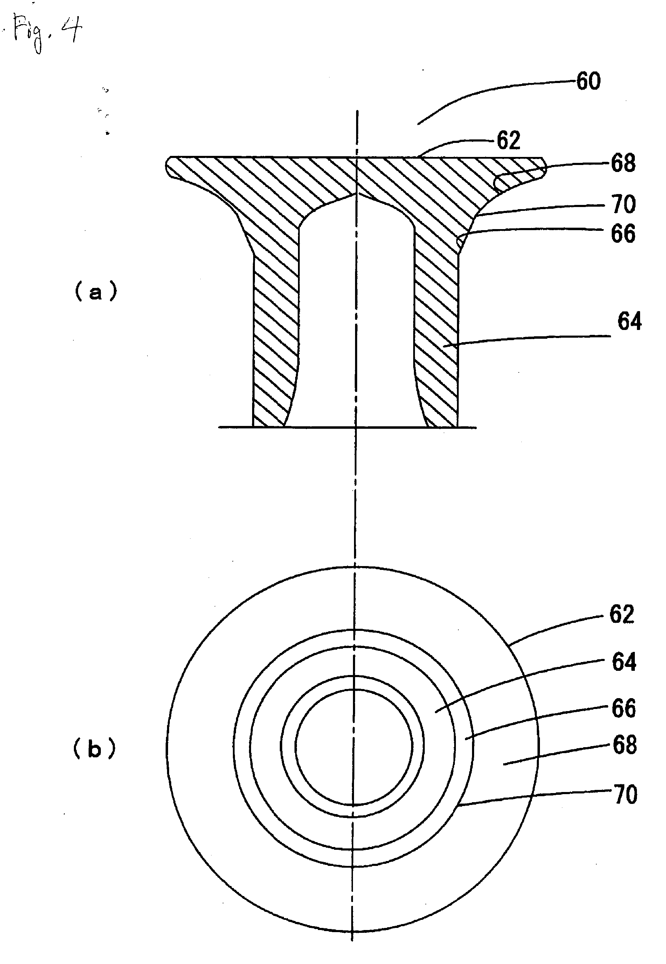

Next, a rivet 60 of a third embodiment of the present invention will be explained using Fig. 4(a) and Fig. 4(b). Similarly, also regarding the rivet 60 of the third embodiment, a structure which differs from that of the rivet 10 of the first embodiment will be particularly explained in detail. Fig. 4(a) is a sectional view for explaining the rivet 60 of the third embodiment, and Fig. 4(b) is a bottom view of the rivet 60.

The rivet 60 of the third embodiment has a first enlarged-diameter portion 66 and a second enlarged-diameter portion 68 between a head part 62 and a leg part 64. The first enlarged-diameter portion 66 extends from the leg part 64, and has a shape in which an outside diameter is gradually increased by a certain amount. Further, the second enlarged-diameter portion 68 extends from an end portion at the head part 62 side of the first enlarged-diameter portion 66, and has an outside diameter whose increasing amount becomes large as getting closer to the head part 62. As shown in Fig. 4(a), although an external shape of the first enlarged-diameter portion 66 is a straight line, an external shape of the second enlarged-diameter portion 68 is an arc shape (a part of a circle). As a result of a sudden change of the increasing ratios of the outside diameters of the first enlarged-diameter portion 66 and the second enlarged-diameter portion 68, a corner portion 70 is formed at a connecting point between the first enlarged-diameter portion 66 and the second enlarged-diameter portion 68.

Therefore, also in the third embodiment, a space portion is formed between an upper layer workpiece and the rivet 60 in a state where the rivet 60 is driven into the workpiece. Specifically, since the workpiece and the rivet 60 come in contact at the first enlarged-diameter portion 66 and the second enlarged-diameter portion 68, respectively, the sealing property between the rivet 60 and the workpiece is improved. Consequently, the generation of rust or electric corrosion between the rivet 60 and the workpiece can be prevented.

Note that in the third embodiment, the external shape of the second enlarged-diameter portion 68 is the arc shape. However, it is not limited to the arc shape, and the second enlarged-diameter portion 68 can also have a curved external shape (quadratic function curve, and the like, for example). This is because a corner portion 70 can be formed even in this case, since it is possible to make the increasing ratio of the outside diameter of the second enlarged-diameter portion 68 differ from that of the first enlarged-diameter portion 66.

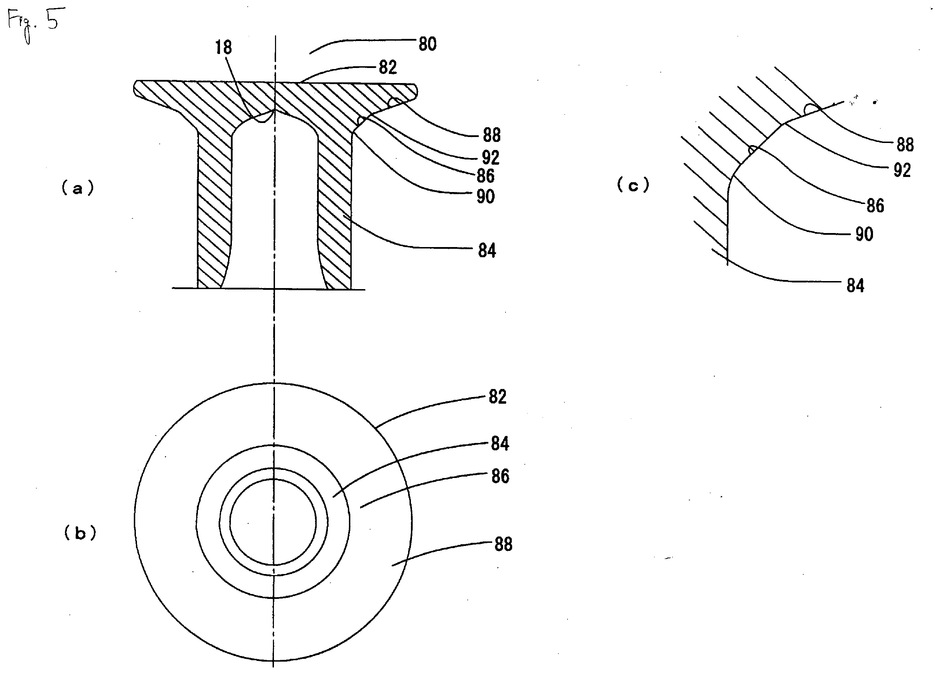

Next, a rivet 80 of a fourth embodiment of the present invention will be explained using Fig. 5(a), Fig. 5(b) and Fig. 5(c). Similarly, also regarding the rivet 80 of the fourth embodiment, a structure which differs from that of the rivet 10 of the first embodiment will be particularly explained. Fig. 5(a) is a sectional view for explaining the rivet 80 of the fourth embodiment, and Fig. 5(b) is a bottom view of the rivet 80. Note that Fig. 5(c) is an enlarged view of a substantial part of the rivet 80.

The rivet 80 of the fourth embodiment has a first enlarged-diameter portion 86 and a second enlarged-diameter portion 88 between a head part 82 and a leg part 84. Further, the first enlarged-diameter portion 86 extends from the leg part 84 via a first curved portion 90. Further, the second enlarged-diameter portion 88 extends from the first enlarged-diameter portion 86 via a second curved portion 92 toward the head part 82. The outside diameters of the first enlarged-diameter portion 86 and the second enlarged-diameter portion 88 are respectively increased by a certain amount from the leg part 84 toward the head part 82, in which an increasing ratio of the outside diameter of the second enlarged-diameter portion 88 is larger than that of the first enlarged-diameter portion 86. Further, the first curved portion 90 and the second curved portion 92 are respectively a part of an arc having a predetermined radius, in which a radius of a circle having an arc composed of a part of the first curved portion 90 is larger than a radius of a circle having an arc composed of a part of the second curved portion 92.

Therefore, also in the fourth embodiment, a space portion is formed between an upper layer workpiece and the rivet 80 in a state where the rivet 80 is driven into the workpiece. Specifically, since the workpiece and the rivet 80 come in contact at the first enlarged-diameter portion 86 and the second enlarged-diameter portion 88, respectively, the sealing property between the rivet 80 and the workpiece is improved. Consequently, the generation of rust or electric corrosion between the rivet 80 and the workpiece can be prevented.
Further, in the fourth embodiment, since the first curved portion 90 and the second curved portion 92 are provided, it is possible to alleviate a concentration of stress caused when the leg part 84 of the rivet 80 is deformed outward at the time of driving the rivet 80 into the workpiece, which can enhance the strength of the rivet 80.

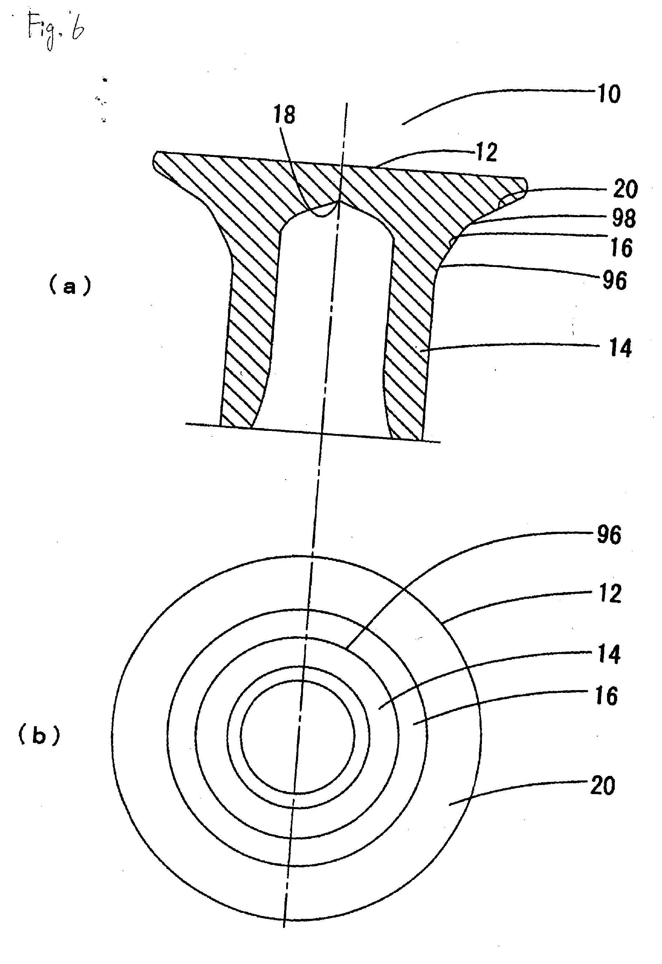

Note that a modified example of the fourth embodiment shown in Fig. 5(a), Fig. 5(b) and Fig. 5(c) in which the corner portion 22 and the corner portion 21 of the rivet 10 in Fig. 1(a) and Fig. 1(b) are respectively replaced by a first curved portion 96 and a second curved portion 98 is shown in Fig. 6(a) and Fig. 6(b). Also in the embodiment shown in Fig. 6(a) and Fig. 6(b), since the first curved portion 96 and the second curved portion 98 are provided, the strength of the rivet 10 can be improved.

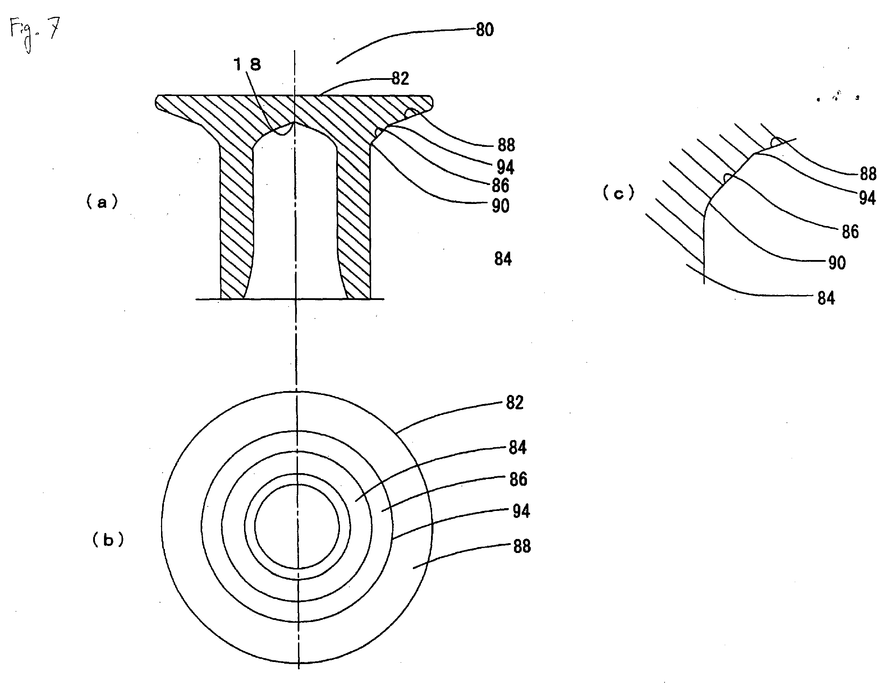

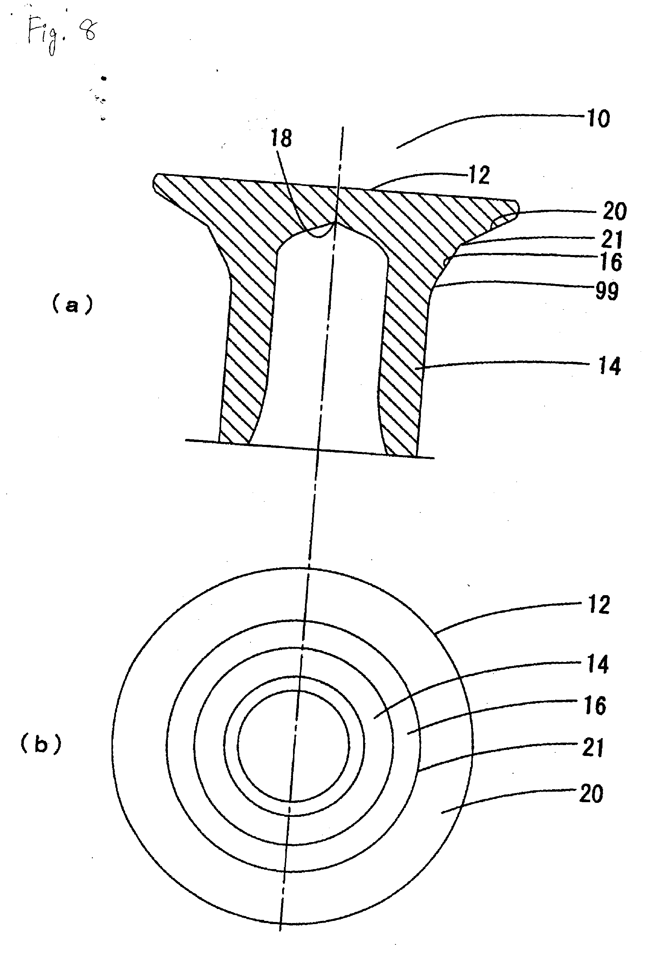

Further, in the fourth embodiment in Fig. 5(a), Fig. 5(b), and Fig. 5(c), each of the first curved portion 90 and the second curved portion 92 has a curved shape. However, it is not limited to this shape, and, for example, it is possible to make only the first curved portion 90 have a curved shape, and to make a portion between the first enlarged-diameter portion 86 and the second enlarged-diameter portion 88 to be a corner portion 94, as shown in Fig. 7(a) and Fig. 7(c). Also in the embodiment shown in Fig. 7(a), Fig. 7(b), and Fig. 7(c), a concentration of stress caused when the leg part 84 of the rivet 80 is deformed outward can be alleviated by the first curved portion 90. The concentration of stress due to the deformation of the leg part 84 is likely to happen especially at a portion closer to the leg part 84. Therefore, by making only the first curved portion 90 have a curved shape, it is possible to improve the strength of the rivet 80. Further, a modified example of the rivet 80 of the embodiment shown in Fig. 7(a), Fig. 7(b), and Fig. 7(c), in which the corner portion 22 of the rivet 10 in Fig. 1(a) and Fig. 1(b) is replaced by a first curved portion 99 is shown in Fig. 8(a) and Fig. 8(b). Also in the embodiment shown in Fig. 8(a) and Fig. 8(b), since the first curved portion 99 is provided, the strength of the rivet 10 can be improved.

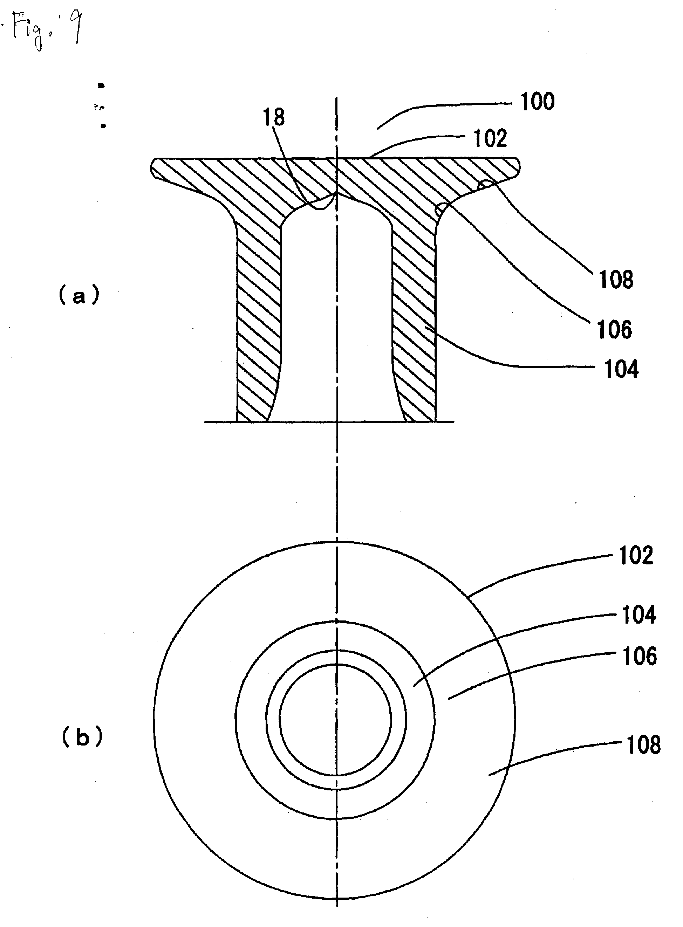

Next, a rivet 100 of a fifth embodiment of the present invention will be explained using Fig. 9(a) and Fig. 9(b). Similarly, also regarding the rivet 100 of the fifth embodiment, a structure which differs from that of the rivet 10 of the first embodiment will be particularly explained in detail. Fig. 9(a) is a sectional view for explaining the rivet 100 of the fifth embodiment.

The rivet 100 of the fifth embodiment has a first enlarged-diameter portion 106 and a second enlarged-diameter portion 108 between a head part 102 and a leg part 104. The first enlarged-diameter portion 106 extends from the leg part 104, and has an outside diameter whose increasing amount becomes large as getting closer from the leg part 104 to the head part 102. As shown in the sectional view in Fig. 9(a), the outside diameter of the first enlarged-diameter portion 106 is an arc shape (a part of a circle). Further, the second enlarged-diameter portion 108 has an outside diameter which is gradually increased by a certain amount as getting closer to the head part 102, and a shape of the outside diameter thereof is a straight line, as shown in Fig. 9(a).

Therefore, also in the fifth embodiment, since a space portion is formed between an upper layer workpiece and the rivet 100 in a state where the rivet 100 is driven into the workpiece, the sealing property between the rivet 100 and the workpiece is improved. As a result, the generation of rust or electric corrosion between the rivet 100 and the workpiece can be prevented.
Further, in the fifth embodiment, the portion extending from the leg part 104 is made to be the first enlarged-diameter portion 106 with a curved shape. Therefore, it is possible to alleviate a concentration of stress caused when the leg part 104 of the rivet 100 is deformed outward at the time of driving the rivet 100 into the workpiece, which can enhance the strength of the rivet 100 with respect to the stress.

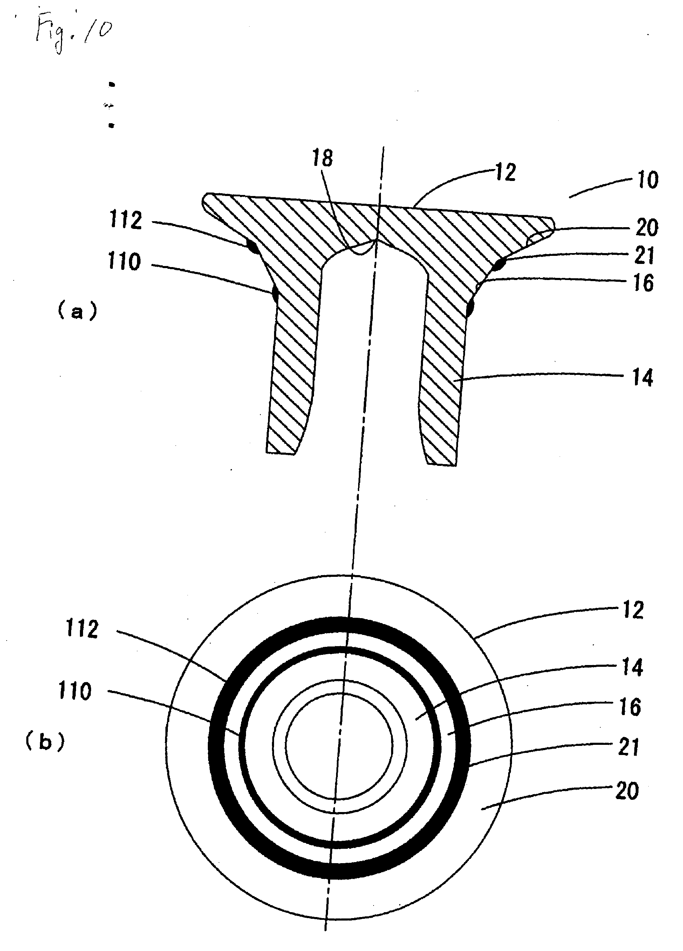

Further, the above-described respective embodiments may be structured to have sealing members disposed at the corner portions, as shown in Fig. 10(a) and Fig. 10(b). If explaining this using the example applied in the first embodiment, a sealing member 110 is disposed at a position at which the first enlarged-diameter portion 16 starts to extend from the leg part 14 of the rivet 10 in Fig. 10(a) and Fig. 10(b), and a sealing member 112 is disposed at a position at which the second enlarged-diameter portion 20 starts to extend from the first enlarged-diameter portion 16. By providing the sealing members 110 and 112 at such positions, the sealing property between the upper layer workpiece 24 and the rivet 10 becomes secured. Note that the sealing member 110 and the sealing member 112 are not necessarily to be used in combination all the time, and, at least either of the sealing member 110 or the sealing member 112 can be used.

Although the present invention is embodied in the above-described respective embodiments, it is needless to say that the present invention is not limited to the structures of the above-described respective embodiments. For example, the first embodiment has a structure in which the leg part 14 of the rivet 10 does not pierce the lower layer workpiece 26 downward. However, the leg part 14 may by structured to pierce the lower layer workpiece 26 downward. This is because the sealing property between the rivet and the workpiece is enhanced in the above-described respective embodiments, and thus, by providing a structure in which the rivet does not pierce the lower layer workpiece, ensuring the sealing property is no longer required.
Further, the rivet of the present invention is applicable to workpieces which are stacked in three layers or more.

## Claims

1. A rivet for joining a plurality of members, comprising:
a head part;
a leg part whose inside diameter side is hollow;
a first enlarged-diameter portion existing between said leg part and said head part, and whose outside diameter size is increased from said leg part toward said head part at a predetermined ratio; and
a second enlarged-diameter portion extending from an end portion at said head part side of said first enlarged-diameter portion, and whose outside diameter size is increased from said leg part toward said head part at a ratio different from the predetermined ratio.

2. A rivet according to claim 1, wherein
said first enlarged-diameter portion extends from an end portion at said head part side of said leg part.

3. A rivet according to claim 1, wherein
said first enlarged-diameter portion extends from the end portion at said head part side of said leg part via a curved-shaped portion.

4. A rivet according to claim 3, wherein
said second enlarged-diameter portion extends from said first enlarged-diameter portion via a second curved-shaped portion.

5. A rivet according to any one of claims 1 to 4, wherein
increasing ratios of the outside diameters of said first enlarged-diameter portion and said second enlarged-diameter portion are respectively constant.

6. A rivet according to any one of claims 1 to 5, wherein
the increasing ratio of the outside diameter of said second enlarged-diameter portion is larger than that of said first enlarged-diameter portion.

7. A rivet according to claim 1, wherein
a shape of the outside diameter of said first enlarged-diameter portion is a curved shape, and the increasing ratio of the outside diameter of said second enlarged-diameter portion is constant.

8. A rivet according to any one of claims 1 to 7, wherein
a sealing member is disposed at a region at which said second enlarged-diameter portion starts to extend from said first enlarged-diameter portion.

9. A rivet according to any one of claims 1 to 8, wherein
a ratio of a length of center axis of said first enlarged-diameter portion to a length of center axis from the end portion at said head part side of said leg part to an end portion at said leg part side of said head part is not less than one-half nor more than two-thirds.

10. A rivet according to any one of claims 1 to 9, wherein
an end portion at said head part side of a hollow portion being inside diameter side of said leg part is positioned further at said head part side than the region at which said second enlarged-diameter portion starts to extend from said first enlarged-diameter portion.

11. A rivet according to any one of claims 1 to 10, wherein
said first enlarged-diameter portion extends from said leg part, and said second enlarged-diameter portion extends from said first enlarged-diameter portion, said rivet further comprising
a third enlarged-diameter portion extending from said second enlarged-diameter portion.
